Europäisches Patentamt

(19) **European Patent Office**

**Office européen des brevets**

(11) Publication number: **0 026 565**
**B1**

(12) **EUROPEAN PATENT SPECIFICATION**

(45) Date of publication of patent specification: **28.09.83**

(51) Int. Cl.³: **A 23 L 1/216, A 23 L 1/214**

(21) Application number: **80302639.2**

(22) Date of filing: **01.08.80**

(54) **A frozen sliced potato product that simulates deep-fried potatoes and a method of manufacturing it.**

(30) Priority: **06.08.79 US 64275**

(43) Date of publication of application:
**08.04.81 Bulletin 81/14**

(45) Publication of the grant of the patent:
**28.09.83 Bulletin 83/39**

(84) Designated Contracting States:
**AT BE CH DE FR GB IT LI LU NL SE**

(56) References cited:
**DE - A - 2 404 612**
**FR - A - 2 269 872**
**FR - A - 2 428 983**
**GB - A - 1 411 838**
**GB - A - 1 506 166**
**US - A - 3 424 591**
**US - A - 3 597 227**
**US - A - 3 751 268**
**US - A - 4 007 292**

(73) Proprietor: **GENERAL FOODS CORPORATION**
**250 North Street**
**White Plains, N.Y. 10625 (US)**

(72) Inventor: **El-Hag, Nabil Ahmed**
**RD No. 1 Tanglewylde Drive**
**Lake Peekskill New York (US)**
Inventor: **Shanbhag, Sudhakar Pundlik**
**2 Cambridge Court**
**Bourbonnais Illinois (US)**

(74) Representative: **Baillie, Iain Cameron et al,**
**c/o Ladas & Parry Isartorplatz 5**
**D-8000 München 2 (DE)**

Courier Press, Leamington Spa, England.

## A frozen sliced potato product that simulates deep-fried potatoes and a method of manufacturing it

Technical field

The invention is in the general field of potato food products and of methods and apparatus for producing them and is particularly concerned with frozen French fries and the like, e.g., "shoe string" potatoes, as customarily packaged and sold in partially prepared condition to housewives, restaurants, and other consumers for rapid processing to the final product.

French fries are presently packaged and sold in frozen, partially prepared condition for reheating in the oven immediately prior to being served. Partially prepared French fries are potatoes that have been washed, peeled, trimmed, sorted, cut, blanched and partially deep fat fried. A busy housewife usually is not equipped for deep fat frying, especially one who buys the frozen product for convenience. In most instances, the product as purchased is placed in an oven in the frozen state and is heated to a temperature adequate for browning and warming. However, the oven-reheated product is by no means the equivalent of a potato that has been completely deep fat fried. This is so because the desirable dehydration of surface areas of the potatoes that took place during the initial frying in deep fat is counteracted during oven reheating by moisture migrating from the center, without the compensating crisping effect of deep fat frying. This tends to make the oven-reheated product limp and soggy. Moreover, such oven-reheated, partially prepared French fries do not acquire the golden brown color of those completely deep fat fried. Thus, oven-reheated frozen French fries of the type commercially available do not have the color, flavor, nor crispness customarily expected of French fries which have been completely deep fat fried, and are generally a disappointment to the purchaser.

The two most serious problems encountered in the commercial manufacture of frozen partially prepared French fried potatoes are non-uniform color formation and poor textural qualities affecting the palatableness of the oven-reheated product. Ideally, upon oven reheating of partiaily prepared French fries, the potatoes should be golden brown in color for maximum consumer attractiveness. Also, the finished oven-reheated product should have a crisp but not hard outer crust surrounding a mealy, white interior having the consistency of a baked potato.

Obtaining these ideal characteristics from a frozen partially prepared French fried potatoes are difficult to obtain on a commercial scale for several reasons. First of all, environmental factors such as the source of the potatoes, their maturity when harvested, the conditions under which they have been stored, and the like all give rise to large variations in the composition of the raw potato which in turn make it difficult to achieve uniformity in the final product.

Color formation in the finished fried potato is now known to be caused basically by the interaction of reducing sugars and amino acids, with ascorbic acid, proteins and other materials also playing a minor role in the color forming process. The environmental factors mentioned above definitely cause changes in the quantity of the color forming bodies contained in the raw potato. For example, storage at low temperatures causes an increase in the reducing sugar content of the potatoes with a corresponding decrease in the starch content. On the other hand, at high storage temperatures, the process is reversed, with increase in the starch content and decrease in the reducing sugar content. These variations are difficult to adjust in a commercial process and make the problem of non-uniform color formation a serious one in the industry.

As for palatability of the product, it is a fact that after oven reheating, partially prepared frozen fried potatoes are often excessively oily and limp with concave sagging surfaces and collapsed interiors. These textural deficiencies definitely make the product less acceptable and detract from its palatability.

There have been proposed several methods in the prior art to overcome some of these problems. One of the most widely known of these is the step of dipping the cut potatoes in an aqueous solution of absorbable reducing sugars prior to frying in order to level out the variations in reducing sugar content of the raw potatoes. The idea here is that if a uniform sugar content can be established in the raw potato, then the color developed from frying should also be uniform.

Another method to overcome some of these problems is to coat the gelatinized surface of the potato product obtained after blanching with an aqueous suspension of gelatinized starch. This step has been described in Vahlsing, U.S. Patent No. 3,175,914 and Murray, U.S. Patent No. 3,597,227, as well as Gold, U.S. Patent No. 3,424,591. However, this and other proposed suggestions have neither fulfilled initial expectations nor been widely accepted in the industry as a satisfactory solution to the problems.

In the making of the present invention, it was a principal object to provide novel frozen, partially prepared French fries capable of reconstitution in the oven to a condition more nearly equivalent to freshly deep fat fried French fries than had heretofore been possible.

Disclosure of the invention

The general purpose of this invention is to provide partially prepared potato comestibles that approximate the attributes and characteristics of deep fat fried potato products upon reheating. The present invention consists of a novel frozen partially prepared potato composition. These products are particularly suited for a unique technique for cooking the frozen comestible to reproduce, color, taste, moisture and texture profiles of freshly deep fat fried potatoes. To obtain the desired uniform potato product color upon heating, the potato product should be par-fried providing a slight brown color. A light brown color developed is more appealing to the consumer than the near white colored potatoes that do not appear to approximate the final finished product. The new partially prepared potato product comprises selected percentages of water, oil and potato solids to yield a frozen, starch-coated par-fried potato product having 24—54% water; 12—18% oil; and 28—58% potato solids by weight. It has been determined that there is definite correlation between the percentages of water, oil and potato solids and the texture of deep fat fried potatoes. One skilled in the art will appreciate that total solids is the combinations of potato solids and oil solids. It has been found that within these percentage of total solids to water, a more desirable product is produced. Surprisingly, the increase in the amount of oil solids does not result in a oily and soggy potato product. Heretofore, the prior art has produced potato comestibles of lower total solids. The higher total solids partially prepared French fried potatoes have been neglected because of the perceived high costs of raw materials and processing costs. However, when partially prepared potato products having high total solids are oven reheated, they are highly palatable without the accustomed excessive oiliness and without being limp with concave sagging surfaces and collapsed interiors. Because the oven reheated partially prepared potato products having high total solids obviates prior art problems, consumers are more inclined to purchase a superior product. The crust thickness of the oven-reheated potato product should closely approximate the crust thickness of deep fat fried potatoes. To achieve this, the partially prepared potato product should have a negligible crust thickness after parfrying, i.e., before reheating it to be served for consumption. These textural and color attributes have not been duplicated by oven-heating prior art frozen partially prepared potato products.

Preferably, the partially prepared potato comestible is heated on a heat transferring apparatus or device. A heat transferring apparatus or device is defined as a means of supporting discrete pieces of food in an oven, whereby the effect of conduction heating is minimized and the effect of convection heating is maximized. In order to maximize such type of heating, the amount of structure supporting the comestible in the oven should be minimized.

It is an advantage object of this invention to develop an oven-reheatable potato product that is significantly preferred to the prior art on the basis of taste/eating satisfaction and are at parity with deep fat fried products. Another object of the invention is the provision of convenient preparation and clean-up, whereby the time and effort involved is lessened.

A further advantage is to provide a product having a storage life of at least six months in normal frozen distribution conditions, and thereby maintaining acceptable quality. It is still another object to provide products capable of being placed directly into an oven from the freezer and heated within ten minutes and which generate a deep fat fried flavor and aroma.

Other objects, features and advantages of this invention will be apparent from the following detailed description and appended claims.

Description of photomicrographs

Referring now to the figures:

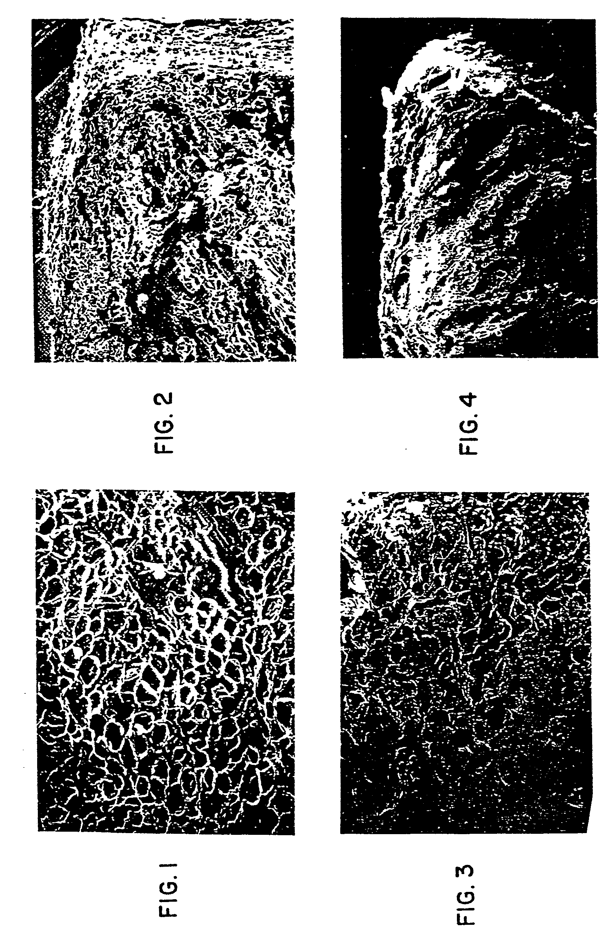

Figures 1, and 2, show the granular nature of conventional frozen potatoes as received by fast food restaurants. Figure 1 (magnification 63x) depicts the surface of the potato while Figure 2 (magnification 25x) represents a cross sectional view of the potato.

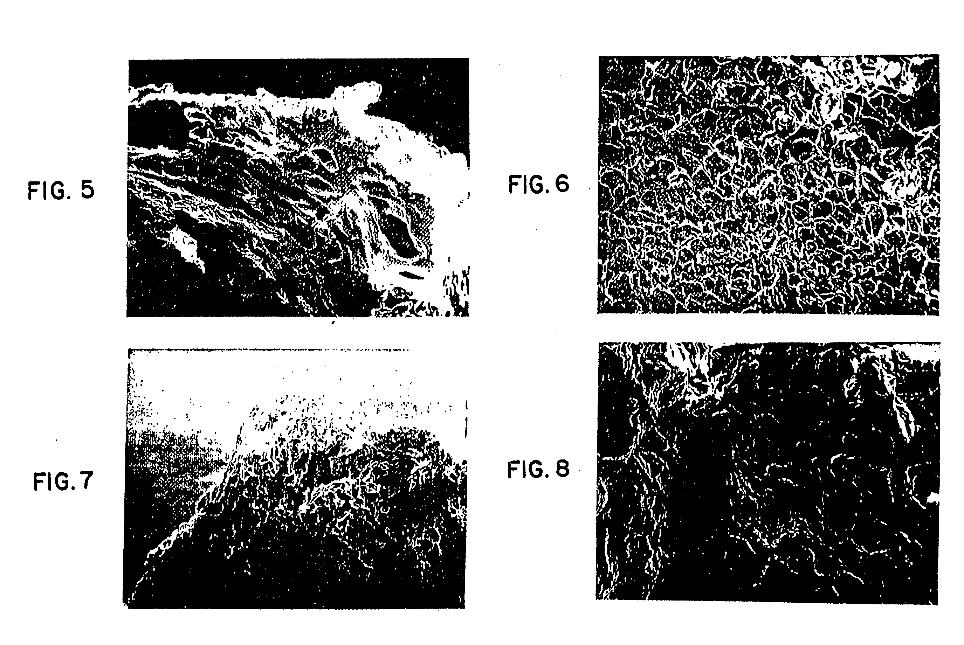

Figures 3, 4, and 5 shows the frozen product of this invention having an essentially completely disrupted cellular structure on the surface of the comestible which is acellular in appearance with little granular character although cell walls are present precluding a homogeneous appearance. Figure 3 (magnification 50x) depicts the surface of the potato, while Figure 4 (magnification 20x), and 5 (magnification 50x) represent the cross sectional view of the potato.

Figures 6, and 7 show the granular nature of frozen par-fried potatoes sold at retail. Figure 6 (magnification 50x) depicts the surface of the potato, while figure 7 (magnification 20x) represents the cross sectional view of the potato.

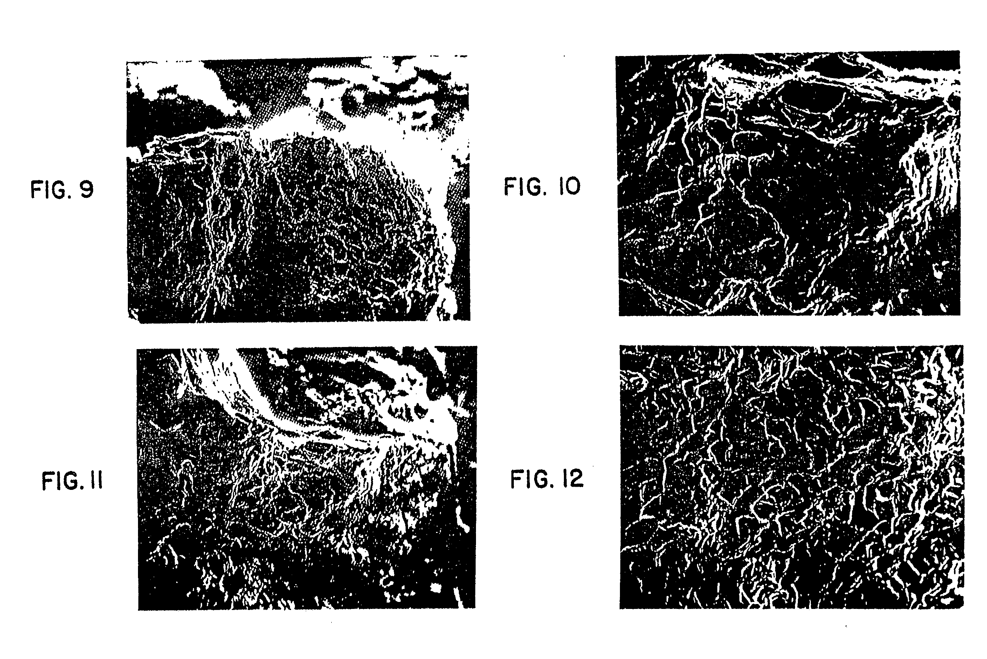

Figures 8 and 9 show the acellular surface of deep fat fried potato as sold by fast food restaurants. Figures 8 (magnification 50x) and 9 (magnification 20x) represent the surface of the potato.

Figures 10 (magnification 50x) and 11 (magnification 20x) show the oven prepared product of this invention having acellular structure similar to the deep fat fried potatoes of Figures 8 and 9.

Figure 12 (magnification 50x) shows the granular surface structure of an oven prepared retail product.

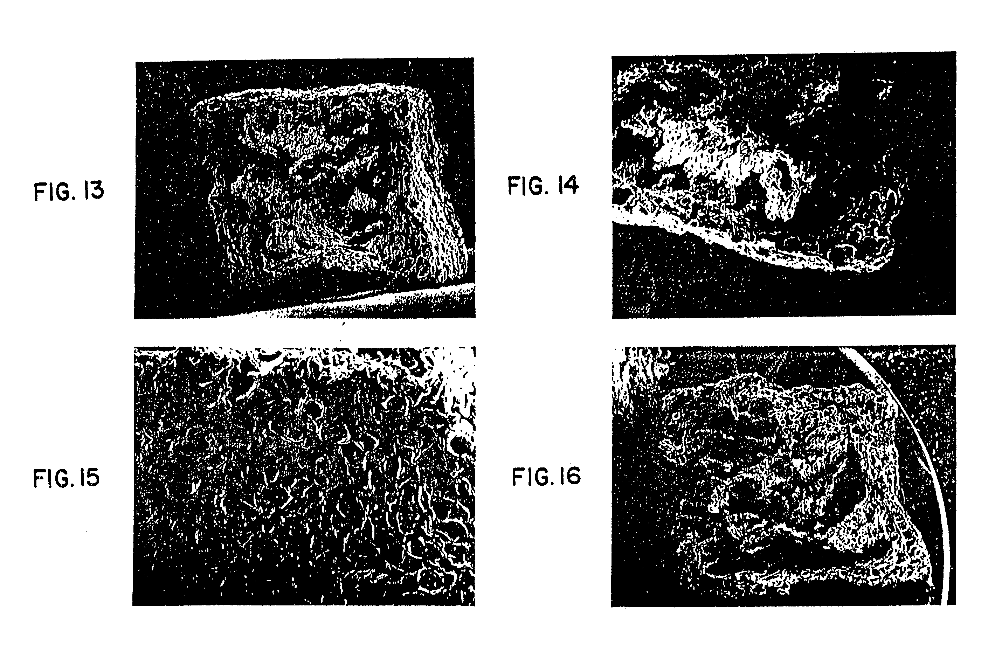

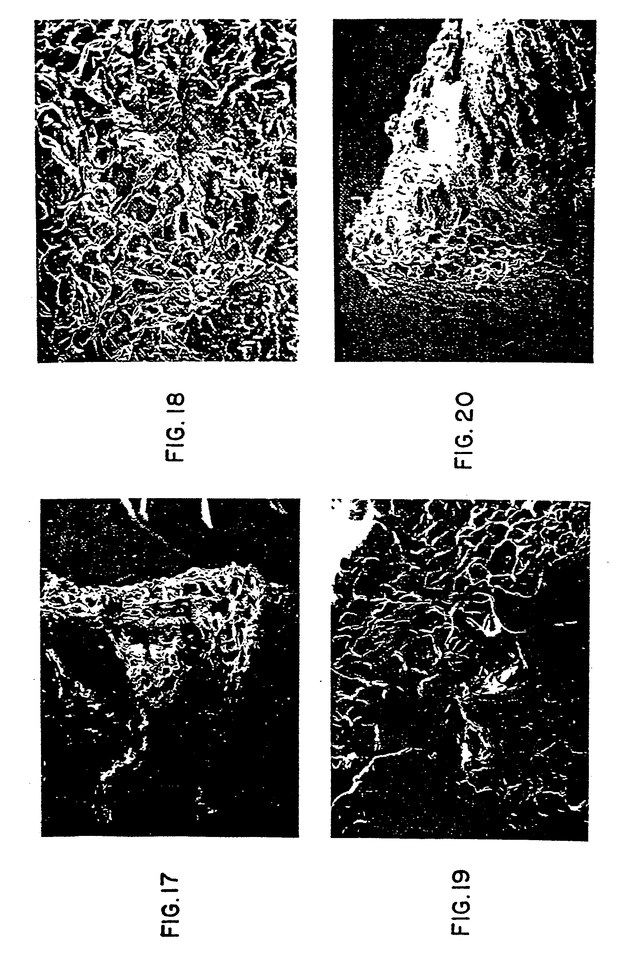

Figures 13, 14, and 15 show the modified product of this invention which has received no oil soak, but has received only starch coating. Figure 13 (magnification 11x) and 14 (magnification 20x) depict a cross sectional view of the potato while Figure 15 (magnification 50x) represents the surface of the potato.

Figures 16, 17 and 18 show a modified product of this invention which has received no starch coating, but has received only oil soaking. Figures 16 (magnification 20x) and 17 (magnification 20x) depict a cross sectional view of the potato while Figure 18 (magnification 50x) represents the surface of the potato.

Figures 19 and 20 show a 50% total solids potato that has not been starch dip nor oil soaked. Figure 19 (magnification 50x) depicts the surface of the potato surface while Figure 20 represents the cross sectional view of the potato.

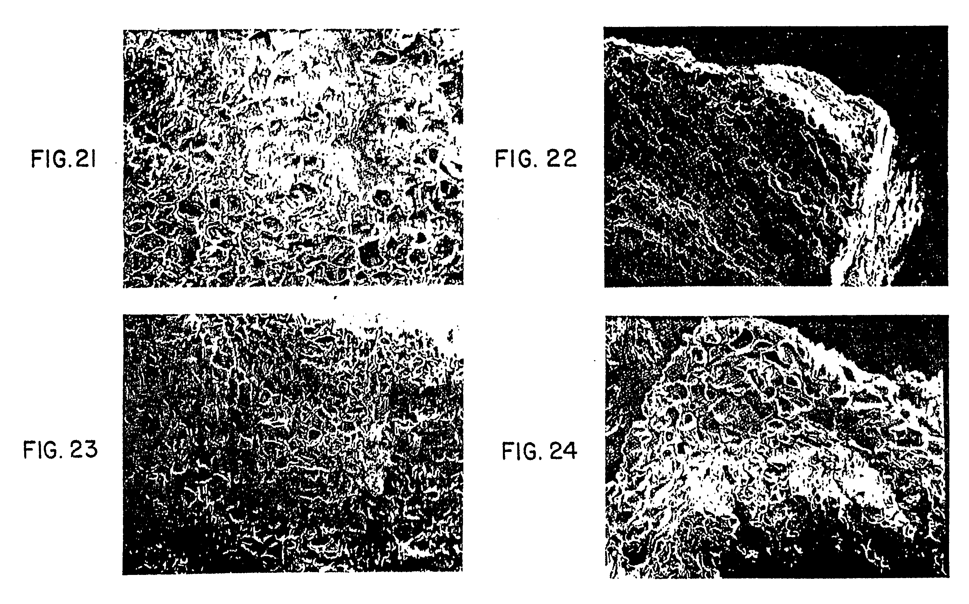

Figures 21, 22, 23 and 24 show the granular nature of other brands of par-fried potatoes sold at retail. Figures 21 (magnification 50x) and 22 (magnification 20x) depict the granular nature of the surface cross sectional view of one retail brand. Figure 23 (magnification 50x) and 24 (magnification 25x) also depict the granular nature of the surface and cross sectional view of another retail brand. Globules of oil can be seen on the potato surface.

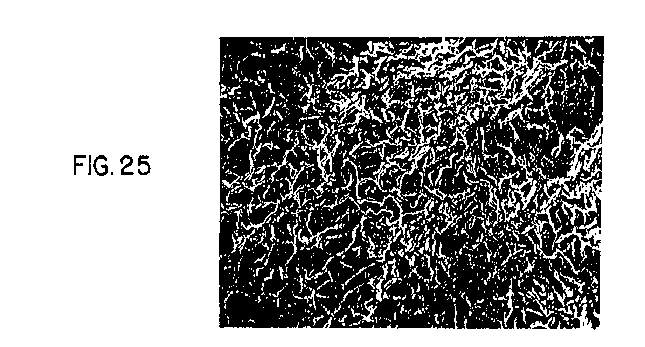

Figure 25 (magnification 50x) represents the oven prepared product of Figures 23 and 24. The picture depicts the still predominant granular surface.

Best mode for carrying out the invention

The quality of French fries will vary with the potato used. This variance will occur both between different species of potatoes and the age of the potato within a given species. The variance is due to different chemical characteristics inherent in the potatoes, such as sugar content, starch content, and specific gravity. The problems caused by variations of such properties in potatoes are discussed in detail in Potato Processing, published in 1959 by the A.V.I. Publishing Co., Inc., Westport, Connecticut, and edited by W. F. Talbert and O. Smith. Despite these variations, the present invention enables the production of superior quality French fry potatoes in a conventional home oven as compared to the same raw potatoes prepared by conventional potato processing which are subsequently reheated on a baking pan or ridged bottom tray in a conventional home oven.

In accordance with the present invention, raw unpeeled white potatoes are obtained for processing. Any variety of potatoes is acceptable, for instance Garnet Chili, Early Rose, Russet Rural, Peach Blow, Early Ohio, Triumph, Kennebec, Merrimack, Delus, Saco, Katahdin, Bounty, Cherokee, Chippewa, Early Gem, Haig, Irish Cobbler, La Rouge, Norgold Russet, Norland Onaway, Pungo, Red La Sorda, Red McGlure, Red Pontiac, Viking or White Rose. However, it is preferred to use Russet Burbank or Katahdin potatoes in the practice of this invention to obtain the best combination of internal texture and flavor in the final French fry potato product.

The potatoes are washed, peeled, trimmed, sorted, cut and blanched. Each of these steps is well known in the art and discussed in detail in the Potato Processing reference described above.

The cut potato strips are further processed by one of three methods known in the art. In the first method, the cut potato strips are blanched in approximately 74°C to 93°C (approximately 165°F to 200°F) water for 6—20 minutes, cooled to less than 38°C (approximately 100°F), then blanched again with approximately 74°C to 93°C (approximately 165° to 200°F) water for 3 to 4 minutes, and treated with a dextrose dip at approximately 71°C (approximately 160°F) for 30 seconds. In the second method, the cut potato strips are pre-treated with water below approximately 68°C (approximately 155°F) for 3 to 8 minutes, treated with sodium acid pyrophosphate and sulfur dioxide to a 4.0 pH, dried with approximately 93°C to 121°C (approximately 200°F to 250°F) air for 12 minutes, and steam blanched at atmospheric pressure for 5 to 7 minutes. The third method, the cut potato strips are simply blanched for a longer period of time as known in the art.

Generally, the cut potato strips are water-blanched prior to frying. Advantages of blanching include more uniform color of fried products, reduction of fat adsorption through gelatinization of the surface starch, reduced frying time since the potato is partially cooked by blanching, and improved texture of the final product. Blanching has a leeching effect on the sugars and serves to even out variations of sugar concentration at or near the surfaces of the cut potato strips. This gives a lighter and more uniform color on frying. One skilled in the art understands that it is common practice to operate two blanchers in series for greater flexibility and more effective control of product color.

After blanching and after the gelatinized surface layer on the potato solids has been extracted of substantial amounts of soluble sugars, the surface layer is wetted with an aqueous suspension of a film forming hydrocolloid, glucose polymer, most preferably potato starch which is not pregelatinized. However, one skilled in the art will appreciate that gelatinized starch may also be used, but at lower concentrations. The starch bath provides a very accessible layer of starch on each potato piece. Without the starch treatment, the cut potato slices have only the natural starch which is imbedded in the potato cell matrix.

The sliced, blanched potatoes are dipped in a potato starch solution of a concentration from 1% to 10%, most preferably at a concentration of 5% which is maintained from approximately 16°C to 27°C (approximately 60°F to 80°F). The potatoes should be dipped for 5 to 90 seconds, most preferably for 20 to 40 seconds. The concentration and temperature of the starch solution as well as the dipping time is controlled to coat the cut potato strips. The starch solution will contain more amylopectin than amylose. The amylopectin being a highly branched chain glucose polymer provides the desired film forming.

Since the hydrocolloid film functions not only to minimize oil adsorption, but also to control moisture loss during frying and oven reheating, the amount of hydrocolloid on the potato surface, i.e., the film thickness, is important. A too thin film provides inadequate oil resistance and permits a high moisture and yield loss. Yet a heavy coating impairs the development of a uniform color and often leads

4

to the rupture of the film from excessive internal pressure during frying or oven reheating. A heavy coating of starch also permits entrapment of oil and causes an undesirable mottled or speckled surface color. Moreover, when the starch coating is omitted, the potato product lacks freshly fried flavor and is less crisp. However, proper control of the film thickness can be achieved by adjustment of the viscosity and temperature of the aqueous treating solution and the contact time.

After the cut potato slices have been starch coated, they are oil soaked. Oil soaking is for 2 to 6 minutes at a temperature of approximately 49°C to 99°C (approximately 120°F to 210°F). More preferably, the oil soak is for 3 to 5 minutes at a temperature from approximately 71°C to 88°C (approximately 160°F to 190°F). During oil soaking, the added starch layer gelatinizes substantially and the liberated amylose and amylopectin form a relatively homogeneous layer of polysaccharide-oil complex on the surface. The product is then par-fried.

The par-frying step produced what is known as a "par-fried" or "oil-blanched" potato. Par-fries require but a minimum of frying at the processing plant. This accomplishes some browning and crisping as well as heating the potato strip. To have a palatable potato product which has a color similar to deep fat fried potatoes, the color must be partially developed before reheating it for consumption. As color development occurs, crust formation begins. Most importantly, par-frying after oil soaking regulates the percentages of water and oil in the potato comestible. It is desirable that the range of water, oil and potato solids be from 24—54% water, 12—18% oil, and 28—58% potato solids by weight. More desirable, the potato product comprises 45% to 54% water by weight, 13% to 17% oil by weight and 28% to 41% potato solids by weight. Preferably total solids (potato and oil) should exceed 46% by weight with the oil content exceeding 12% by weight. More preferably the total solids (potato solids and oil solids) is greater than 50%. Moreover when the total solids is greater than 50% it is even more preferred to have the oil component greater than 14% of the potato product.

Par-frying is accomplished in a fryer where a somewhat higher and more nearly optimum temperature for development can be maintained as compared to the oil soak step. In the transfer from the oil soak to the par-fryer the strips are agitated which ensures even color development and avoids light areas caused by two or more pieces sticking together throughout the frying process. The temperature of the par-fryer ranges from approximately 163°C to 218°C (approximately 325°F to 425°F) while the time may range from 10 seconds to 150 seconds. More preferably, the temperature ranges from approximately 177°C to 204°C (approximately 350°F to 400°F) and the time of par-frying ranges from 30 to 90 seconds. The high temperature par-frying is essential to gain desired color, crust texture and to adjust oil and moisture levels. Upon exiting the fryer, the potato product should have a negligible crust thickness.

After par-frying, the product is quick frozen in conventional manner at temperatures below the freezing point of water, and preferably below −17°C (approximately 0°F).

The starch coated, oil soaked, par-fried potato products having high total solids content were viewed by a scanning electron microscope. The resulting images showed a distinct acellular structure of a polysaccharide-oil molecule. This product was used as a control in evaluating other potato products.

The following hypothesis is used to explain this phenomena of the invention. However, the hypothesis of the existence and mechanism by which the invention may operate is not designed to limit the scope of the present invention, but is advanced only as a means of explaining the effects produced. Verification of the polysaccharide-oil complex hypotheses was attempted by processing potatoes with the starch bath and no oil-soak, and with the oil-soak and no starch bath. Scanning electron microscopic photographs of the surface and cross-section of each were compared to potato products that had been both starch coated and oil soaked. Taking the samples directly from the starch bath to the par-fry gave much less indication of a layer of starch polymers. Apparently the high temperature frying gelatinized the starch but also dehydrated the surface before the granular nature was lost. The product from the oil-soak but no added starch was more like the potato products that had been both starch coated and oil soaked, with a surface layer, similar but not as pronounced. The oil-soak is most effective when there is a layer of starch readily available for gelatinization. It would be expected to effect the granules in the surface of the potato matrix, but not as completely.

Uniformity of color and crust thickness in the potato product is further related to the method in which the partially prepared potato is heated for consumption. It has been found that a uniform heat transfer to the starch coated, oil soaked, par fried potato product more closely approximated the uniformity of color and crust thickness of deep fat fried potatoes. Products that are heated on a baking pan lack uniform heat transfer and the conductive heating will cause a non-uniform color and crust thickness where the pan contacts the comestible.

Table I is a comparison of the composition of one product (column A) prepared by the starch dip, oil soak, par-fry process (invention) to conventional frozen potatoes as received by fast food stores (column B) and sold at retail for oven preparation (column C).

Par-fried, fast food frozen shoe string potatoes (Product B) are dipped in an ungelatinized potato starch aqueous mixture to overtly coat the potato with ungelatinized potato solids. These potatoes are then subjected to an oil soak of from approximately 49°C to 99°C (approximately 120°—210°F) for a period of time from 2—6 minutes. Higher temperatures and/or longer times, within the ranges are given, are required when the potato is frozen. Adjustment within the range of time and temperature is a

5

routine matter so long as the finished product has surface characteristics by photomicrograph which indicate an acellular structure. The soaked unfrozen and partially gelatinized potato is then subjected to a par-frying at a temperature of approximately 163°C to 218°C (approximately 325°—425°F) for from 10—150 seconds. The product, (Product A), is then frozen for distribution and sale.

The frozen product, A, is then reheated in a monolayer preferably in a manner optimizing convection. When prepared on a screen in an oven its final composition is showing in A[1]. This product is compared to two samples cooked as follows. Frozen potatoes as received by a fast food chain are deep fat fried to the composition shown in B[1].

Retail frozen potatoes are oven-heated and cooked to a composition shown in C[1] with (a) employing a screen as in preparing A[1] and (b) employing the conventional cookie sheet. It is evident that the cooked retail product composition C[1] whether a cookie sheet or screen is employed, differs significantly from the finished product A[1]. The flavor and textural characteristics of the products of C[1] also are significantly different compared to the product of this invention which is significantly preferred by the consumer. The invention product has flavor and texture characteristics in fact that are not appreciably different from the deep fat fried product B[1]. Appreciable flavor difference in C[1] product is caused by using a screen to optimize convection heating as compared to a cookie sheet. The product of this invention has improved texture and flavor compared to retail products oven prepared whether by screen or cookie sheet. When fresh conventionally preprocessed potatoes are subjected to ungelatinized potatoes starch dipping and oil soaking followed by par-frying, similar improvements are apparent.

Table I further demonstrates the principle that by starting with a unique frozen starch coated, oil soaked, partially prepared potato product which has a solids to water to oil ratio that is different from the prior art, one may obtain a potato product similar to deep fat fried potatoes.

Histochemical examination of the product of this invention and selected commercial products indicated that this new product is unique in that it shows a distinctly intact and even cellular structure. A proteinaceous material is clearly visible in the outer layer of this new product.

TABLE I

### Frozen products (as sold)

| Product | "A" Invention frozen | | | "B" Fast food frozen | | | "C" Retail frozen | | |
|---|---|---|---|---|---|---|---|---|---|
| Composition | Potato solids | Water | Oil | Potato solids | Water | Oil | Potato solids | Water | Oil |
| % | 48 | 36 | 16 | 28 | 63 | 9 | 33 | 57 | 10 |
| Parts | 2.9 | 2.2 | 1 | 3.2 | 7.0 | 1 | 3.2 | 5.6 | 1 |
| Range | 2.6—3.1 | 2.0—2.3 | 1 | 2.8—3.7 | 6.4—7.8 | 1 | 2.5—3.7 | 4.8—6.7 | 1 |

### Final prepared product (as eaten)

| Composition | A¹ Oven-heated | | | B¹ Deep fat fried | | | C¹ Oven-heated | | |
|---|---|---|---|---|---|---|---|---|---|
| | Potato solids | Water | Oil | Potato solids | Water | Oil | Potato solids | Water | Oil |
| % | 50 | 33 | 17 | 47 | 35 | 18 | 52 | 37 | 11 |
| Parts | 2.9 | 1.9 | 1 | 2.6 | 1.9 | 1 | (a) 4.9 | 3.5 | 1 |
| | | | | | | | (b) 4.7 | 3.4 | 1 |
| Range | 2.7—3.0 | 1.9—2.0 | 1 | 2.5—2.7 | 1.7—2.1 | 1 | — | — | — |

Table II further provides sensory information on the flavor, texture and appearance of commercial fast food French fried potatoes; two commercial oven prepared brands of frozen French fried potatoes, "X" and "Y"; the potato product of this invention, and French fried potatoes made in the home by deep fat frying. The sensory information was developed by six experienced panelists trained in product evaluation. Their conclusion was that the product of this invention was most similar to commercial fast food deep fat fried potatoes in flavor, texture, aroma and appearance. The commercial frozen potato comestibles sold at retail and the home fries were largely different from the product of this invention due to a burnt flavor noticeable in the home fries and Product "X", a more intense starch flavor in Product "Y", a variable texture in Product "X' (hard on one side, soft on the other), a mushy texture in home fries and Product "Y", a lack of aroma in Product "X", non-uniform piece sizes and uneven color in the home fries and Product "X".

| | Commercial fast food product | Potato product of invention | Commercial retail product "X" | Home fries | Commercial retail product "Y" |
|---|---|---|---|---|---|
| Appearance | Light golden brown sl-mod uniform piece size | light golden brown sl-mod uniform piece size | white w/burned side non-uniform piece size | uneven med dark brown mod uniform piece size | golden yellow brown, non-uniform piece size |
| Aroma | sl-mod browned potato/oil grease | sl-mod browned potato/oil grease | very slight oil/ grease | sl-mod browned potato/oil grease | sl-mod brown potato/oil grease |
| Flavor | | | | | |
| Starch | slight | slight | slight-mod | slight | slight-mod |
| oil/grease | slight | slight | slight | slight | slight |
| raw/green potato | slight | slight | very slight | very slight | very slight |
| sweet | slight | very slight | — | very slight | slight |
| salt | slight | — | — | — | — |
| burnt | — | — | slight | slight | — |
| Impact | moderate | slight | slight | slight | slight |
| Texture | | | | | |
| surface oil | slight | slight | threshold level | slight | slight |
| crispness | slight | slight | variable | very slight | slight |
| moisture/oil release | slight-mod | slight | very slight | slight | slight |
| description of breakdown | crisp outside, soft center, least distinction between skin and center | crisp outside, soft center | variable/hard on burnt side, soft on white side | mushy/starch inside, skin separates and is slightly tougher | mushy/starchy inside, skin separates and is slightly tougher |
| Mouthcoat | slight | slight | very slight | slight-mod | slight |

**TABLE II**

Table III further shows that by starting with a potato product having total solids above 46%, the resultant oven heated potato comestible closely approximate those qualities found in a potato product that has been deep fat fried.

TABLE III
Physical & chemical composition

| Frozen composition | Commercial fast food product | Commercial retail product "X" | Commercial retail product "Y" | Potato product of invention |
|---|---|---|---|---|
| % Water | 62—63 | 62—67 | 55—59 | 45—54 |
| % Oil | 7—8 | 7—8 | 8—12 | 13—17 |
| % Potato solids | 29—30 | 35—31 | 31—34 | 28—41 |
| % Total solids | 37—38 | 33—38 | 41—45 | 46—76 |
| Total | 100 | 100 | 100 | 100 |

| Preparation | | | | Heat transferring apparatus |
|---|---|---|---|---|
| | Deep fat fried | Baking pan | Baking pan | |
| Ready-to-eat composition | | | | |
| % Water | 36—40 | 26—46 | 37 | 36—41 |
| % Oil | 15—18 | 8—12 | 11 | 14—16 |
| % Potato solids | 44—49 | 46—62 | 52 | 47—49 |
| % Total solids | 60—64 | 57—74 | 63 | 62—63 |
| Total | 100 | 100 | 100 | 100 |

| Crust thickness (inch) | | | | |
|---|---|---|---|---|
| | 0.015—0.022 | 0.039—0.054 | — | 0.019—0.027 |

In one embodiment of this invention, cut potato strips are pre-treated with water below approximately 68°C (approximately 155°F) for 3 to 8 minutes, then treated with sodium acid pyrophosphate and sulfur dioxide to a 4.0 ph, dried with approximately 93°C to 121°C (approximately 200—250°F) air for approximately 12 minutes, steam blanched at atmospheric pressure for 5 to 7 minutes and frozen in a blast freezer. Each of these steps are known in the art. Next the frozen potato strips are starch coated by dipping the strips into a 4% potato starch bath for 30 seconds at a temperature of approximately 21°C (approximately 70°F). The cut blanched, starch coated potatoes are then oil soaked in an approximately 82°C (approximately 180°F) oil bath for 4 minutes. The cut blanched, starch coated, oil soaked potatoes are then par-fried in 190—193°C (approximately 375—380°F) oil for 60 seconds. The resultant product is then positioned in a blast freezer until they are frozen to a temperature of about −17°C (approximately 0°F). The potato comestibles are subsequently packaged in combination with the heat transferring apparatus. Upon the heating the potato comestibles on the heat transferring apparatus, the resultant ratio between total solids and water as well as color, texture and crust thickness is comparable to potato strips having similar solids content that have been deep fat fried.

**Claims for the Contracting States: BE CH DE FR GB IT LI LU NL SE**

1. A frozen starch-coated, par-fried potato slices comprising 24% to 54% water by weight, 12% to 18% oil solids by weight and 28% to 58% potato solids by weight wherein the potato slices consist of whole potato strips that are to be heated in an oven to simulate deep fat fried potatoes.

2. The potato product of claim 1 which comprises 45% to 54% water by weight, 13% to 17% oil by weight and 28% to 41% potato solids by weight.

3. The potato product of claim 1 wherein the potato solids and oil solids total greater than 50% by weight of the potato comestible.

4. The potato product of claim 3 wherein the oil solids is greater than 14% by weight of the potato comestible.

5. The potato product of claim 4 wherein the surface layer of the potato has a substantially disrupted starch cellular structure which is acellular in appearance, although starch cell walls are present, and wherein said surface layer has little granular character which precludes a homogeneous appearance.

6. A frozen, starch coated, par-fried, sliced potato product according to any one of claims 1, 3, 4 and 5 having a potato solids to water to oil ratio from 2.6:2.0:1 to 3.1:2.3:1 respectively.

7. A method of manufacturing a frozen potato sliced product to be heated in an oven to simulate deep fried potatoes in which the potato is partially cooked by frying before freezing characterised in that whole potato strips are starch-coated, oil soaked, par-fried and frozen to provide a content in the slices by weight 24% to 54% water, 12% to 18% oil solids and 28% to 58% potato solids.

## Claims for the Contracting State: AT

1. A method of manufacturing a frozen potato sliced product to be heated in an oven to simulate deep fried potatoes in which the potato is partially cooked by frying before freezing characterised in that whole potato strips are starch-coated, oil-soaked, par-fried and frozen to provide a content in the slices by weight 24% to 54% water, 12% to 18% oil solids and 28% to 58% potato solids.

2. A method according to claim 1 resulting in a product comprising 45% to 54% water, 13% to 17% oil and 28% to 41% potato solids.

3. A process according to either of claims 1 and 2 characterised in that the potato solids and oil solids total is greater than 50% by weight of the final product.

4. A method according to claim 3 characterised in that the oil solid is greater than 14% by weight of the potato product.

5. A method according to any one of claims 1 to 4 characterised in that the application of starch-coating and treatment of the potato results in the surface layer of the potato having a substantially disrupted starch cellular structure which is acellular in appearance, although starch cell walls are present and wherein said surface layer has little granular character which precludes a homogeneous appearance.

6. A method according to any one of claims 1 to 5 characterised in that the potato solids to water to oil ratio is from 2.6:2.0:1 to 3.1:2.3:1 respectively.

## Patentansprüche für die Vertragsstaaten: BE CH DE FR GB IT LI LU NL SE

1. Stärkeüberzogene, anfritierte und tiefgekühlte Kartoffelstücke, die 24 bis 54 Gewichtsprozent Wasser, 12 bis 18 Gewichtsprozen Öl-TS und 28 bis 58 Gewichtsprozen Kartoffel-TS enthalten, dadurch gekennzeichnet, daß die Kartoffelstücke aus ganzen Kartoffelstücken bestehen, die durch Erhitzen in einem Backofen in ein Produkt umgewandelt werden können, das im Fettbad fritierten Kartoffeln ähnelt.

2. Kartoffelprodukt nach Anspruch 1, dadurch gekennzeichnet, daß es 45 bis 54 Gewichtsprozent Wasser, 13 bis 17 Gewichtsprozent Öl und 28 bis 41 Gewichtsprozent Kartoffel-TS enthält.

3. Kartoffelprodukt nach Anspruch 1, dadurch gekennzeichnet, daß die Kartoffel-TS und der Öl-TS insgesamt mehr als 50 Gewichtsprozent des eßbaren Kartoffelproduktes betragen.

4. Kartoffelprodukt nach Anspruch 3, dadurch gekennzeichnet, daß die Öl-TS mehr als 14 Gewichtsprozent des eßbaren Kartoffelproduktes beträgt.

5. Kartoffelprodukt nach Anspruch 4, dadurch gekennzeichnet, daß die Oberflächenschicht des Kartoffelproduktes eine beträchtlich aufgerissene Stärkezellenstruktur besitzt, die trotz des Vorhandenseins von Stärkezellwänden nichtzellig aussieht, und daß diese Oberflächenschicht eine etwas körnige Beschaffenheit besitzt, die ein homogenes Aussehen ausschließt.

6. Tiefgekühlte, stärkeüberzogene, anfritierte Kartoffelstücke nach einem der Ansprüche 1, 3, 4 und 5, dadurch etwas körnigen Charakter hat, der ein homogenes Aussehen ausschließt.

7. Verfahren nach einem der Ansprüche 1 bis 5, dadurch gekennzeichnet, daß das Verhältnis Kartoffel-TS zu Wasser zu Öl 2,6:2,0:1 bis 1,1:2,3:1 beträgt.

## Patentansprüche für den Vertragsstaat: AT

1. Verfahren zum Erzeugen von tiefgekühlten Kartoffelstücken, die durch Erhitzen in einem Backrohr in ein Produkt umgewandelt werden können, das im Fettbad fritierten Kartoffeln ähnelt, wobei die Kartoffeln vor dem Einfrieren anfritiert werden, dadurch gekennzeichnet, daß ganze Kartoffelstücke derart mit Stärke überzogen, mit Öl betränkt, anfritiert und eingefroren werden, daß sie 24 bis 54 Gewichtsprozent Wasser, 12 bis 18 Gewichtsprozen Öl-TS und 28 bis 58 Gewichtsprozen Kartoffel-TS enthalten.

2. Verfahren nach Anspruch 1, dadurch gekennzeichnet, daß das erhaltene Produkt 45 bis 54% Wasser, 13 bis 17% Öl-TS und 28 bis 41% Kartoffel-TS enthält.

3. Verfahren nach Anspruch 1 oder 2, dadurch gekennzeichnet, daß die Kartoffel-TS und die Öl-TS insgesamt mehr als 50 Gewichtsprozent des Endproduktes betragen.

4. Verfahren nach Anspruch 3, dadurch gekennzeichnet, daß die Öl-TS mehr als 14 Gewichtsprozent des Kartoffelproduktes beträgt.

5. Verfahren nach einem der Ansprüche 1 bis 4, dadurch gekennzeichnet, daß infolge des Überziehens mit Stärke und der Behandlung der Kartoffeln diese eine Oberflächenschicht mit einer beträchtlich aufgerissenen Stärkezellenstruktur besitzen, die trotz des Vorhandenseins vo Stärkezellenwänden nichtzellig aussieht, und daß diese Oberflächenschicht einen etwas körnigen Charakter hat, der ein homogenes Aussehen ausschließt.

6. Verfahren nach einem der Ansprüche 1 bis 5, dadurch gekennzeichnet, daß das Verhältnis Kartoffel-TS zu Wasser zu Öl 2,6:2,0:1 bis 1,1:2,3:1 beträgt.

### Revendications pour les Etats contractants: BE CH DE FR GB IT LI LU NL SE

1. Tranches de pomme de terre revêtues d'amidon, "pré-frites" et congelées comportant 24 à 54% en poids d'eau, 12 à 18% en poids de solides d'huile et 28 à 58% en poids de solides de pomme de terre dans lesquelles les tranches de pomme de terre sont constituées apr des bandes de pomme de terre entière qui sont à cuire au four pour imiter l'apparence de pommes de terre frites.

2. Produit de pomme de terre selon la revendication 1, qui comprend 45 à 54% en poids d'eau, 13 à 17% en poids d'huile et 28 à 41% en poids de solides de pomme de terre.

3. Produit de pomme de terre selon la revendication 1, dans lequel les solides de pomme de terre et les solides d'huile se montent au total à plus de 50% en poids de comestible de pomme de terre.

4. Produit de pomme de terr selon la revendication 3, dans lequel les solides d'huile représentent plus de 14% en poids du comestible de pomme de terre.

5. Produit de pomme de terre selon la revendication 4, dans lequel la couche superficielle de la pomme de terre a une structure cellulaire d'amidon sensiblement rompue qui est d'aspect acellulaire, bien que des parois de cellule d'amidon soient présentes, et dans lequel ladite couche superficielle a peu de caractère granulaire empêchant l'aspect d'être homogène.

6. Produit de pomme de terre en tranche, revêtu d'amidon, "pré-frit" et congelé selon l'une quelconque des revendications 1, 3, 4 et 5 ayant un rapport solides de pomme de terre/eau/huile de 2,6:2,0:1 à 3,1:2,3:1 respectivement.

7. Procédé de fabrication d'un produit de pomme de terre en tranches congelé à réchauffer au four pour imiter l'apparence de pommes de terre frites dans lequel la pomme de terre est partiellement cuite par friture avant congélation, caractérisé en ce que les bandes de pomme de terre entière sont revêtues d'amidon, trempées dans l'huile, "pré-frites" et congelées pour fournir dans les tranches une teneur en poids de 24 à 54% d'eau, 12 à 18% de solides d'huile et 28 à 58% de solides de pomme de terre.

### Revendications pour l'état contractant: AT

1. Procédé de fabrication d'un produit de pomme de terre en tranches congelé à réchauffer au four pour imiter l'apparence des pommes de terre frites, dans lequel la pomme de terre est partiellement cuite par friture avant congélation, caractérisé en ce que les bandes de pomme de terre entière sont revêtues d'amidon, trempées dans l'huile, "pré-frites" et congelées pour fournir dans les tranches une teneur en poids de 24 à 54% d'eau, 12 à 18% de solides d'huile et 28 à 58% de solides de pomme de terre.

2. Procédé selon la revendication 1, conduisant à un produit comprenant 45 à 54% d'eau, 13 à 17% d'huile et 28 à 41% de solides de pomme de terre.

3. Procédé selon l'une quelconque des revendications 1 et 2, caractérisé en ce que les solides de pomme de terre et les solides d'huile se montent au total à plus de 50% en podis du produit final.

4. Procédé selon la revendication 3, caractérisé en ce que les solides d'huile représentent plus de 14% en poids du produit de pomme de terre.

5. Procédé selon l'une quelconque des revendications 1 à 4, caractérisé en ce que l'application du revêtement d'amidon et le traitement de la pomme de terre, conduisent à une couche superficielle de la pomme de terre ayant une structure cellulaire d'amidon sensiblement rompue qui est d'aspect acellulaire, bien que des parois de cellule d'amidon soient présentes, et dans lequel ladite couche superficielle a peu de caractère granulaire empêchant l'aspect d'être homogène.

6. Procédé selon l'une quelconque des revendications 1 à 5, caractérisé en ce que le rapport solides de pomme de terre/eau/huile est de 2,6/2,0/1 à 3,1/2,3/1 respectivement.

FIG. 2

FIG. 4

FIG. 1

FIG. 3

0 026 565

FIG. 6

FIG. 8

FIG. 5

FIG. 7

FIG. 9

FIG. 10

FIG. 11

FIG. 12

0 026 565

FIG. 14

FIG.16

FIG. 13

FIG.15

4

FIG.17

FIG.18

FIG.19

FIG.20

0 026 565

FIG. 22

FIG. 24

FIG.21

FIG. 23

7

FIG. 25